# EUROPEAN PATENT APPLICATION

(11) **EP 2 977 896 A1**
(43) Date of publication of application: **27.01.2016**
(21) Application number: 15174998.3
(22) Date of filing: 02.07.2015
(51) Int. Cl.: G06F 9/46, G06F 9/54

(54) **INFORMATION PROCESSING APPARATUS, INFORMATION PROCESSING METHOD, AND COMPUTER PROGRAM PRODUCT**

(30) Priority: 10.07.2014 JP 2014141959
(71) Applicant: Ricoh Company, Ltd., Tokyo 143-8555 (JP)
(72) Inventor: AKIYOSHI, Kunihiro, Tokyo, 143-8555 (JP); ARAKI, Ryoji, Tokyo, 143-8555 (JP)
(74) Representative: Schwabe - Sandmair - Marx

(57) **Abstract**

An information processing apparatus includes a group of interfaces for accepting a request from one or more programs, an identifying unit configured to identify a program of the one or more programs that corresponds to a caller of an interface of the group of interfaces when the interface is called, and an authorization unit configured to authorize execution of a process associated with the interface in a case where information authorizing the program identified by the identifying unit to use the interface being called is stored in a storage unit.

## Description

### BACKGROUND OF THE INVENTION

### 1. Field of the Invention

The present invention relates to an information processing apparatus, an information processing method, and a computer program product.

### 2. Description of the Related Art

There are image forming apparatuses that include a group of APIs (Application Program Interface) as an interface for receiving a request from an application program, and such image forming apparatuses may be capable of additionally implementing an application program that uses the group of APIs (e.g., Japanese Laid-Open Patent Publication No. 2005-269619). In some cases, such a group of APIs may include a private API that is not published to a third-party vendor but is instead held privately by the vendor of the image forming apparatus (hereinafter referred to as "private API").

However, depending on the application being developed by a third-party vendor, the functionality of the application may be difficult to implement without using the private API. In such a case, if the private API can be published to a specific vendor while avoiding unlimited disclosure of the API, an application may be successfully developed while maintaining confidentiality of the private API.

### SUMMARY OF THE INVENTION

According to one embodiment of the present invention, an information processing apparatus is provided that includes a group of interfaces for accepting a request from one or more programs, an identifying unit configured to identify a program of the one or more programs that corresponds to a caller of an interface of the group of interfaces when the interface is called, and an authorization unit configured to authorize execution of a process associated with the interface in a case where information authorizing the program identified by the identifying unit to use the interface being called is stored in a storage unit.

### BRIEF DESCRIPTION OF THE DRAWINGS

FIG. 1 illustrates an exemplary configuration of an information processing system according to an embodiment of the present invention;
FIG. 2 illustrates an exemplary hardware configuration of a ticket generating apparatus according to an embodiment of the present invention; FIG. 3 illustrates an exemplary functional configuration of the ticket generating apparatus according to an embodiment of the present invention;
FIG. 4 is a sequence chart illustrating exemplary process steps executed by the ticket generating apparatus and a client apparatus;
FIG. 5 illustrates an exemplary configuration of information included in a ticket;
FIG. 6 illustrates an exemplary hardware configuration of an image forming apparatus according to an embodiment of the present invention;
FIG. 7 illustrates an exemplary functional configuration of an image forming apparatus according to an embodiment of the present invention;
FIG. 8 is a flowchart illustrating exemplary process steps executed by the image forming apparatus upon installing an application;
FIG. 9 illustrates an exemplary configuration of a limited API information storage unit; and
FIG. 10 is a flowchart illustrating exemplary process steps executed by the image forming apparatus upon calling a limited API.

### DESCRIPTION OF THE PREFERRED EMBODIMENTS

In the following, embodiments of the present invention are described with reference to the accompanying drawings.

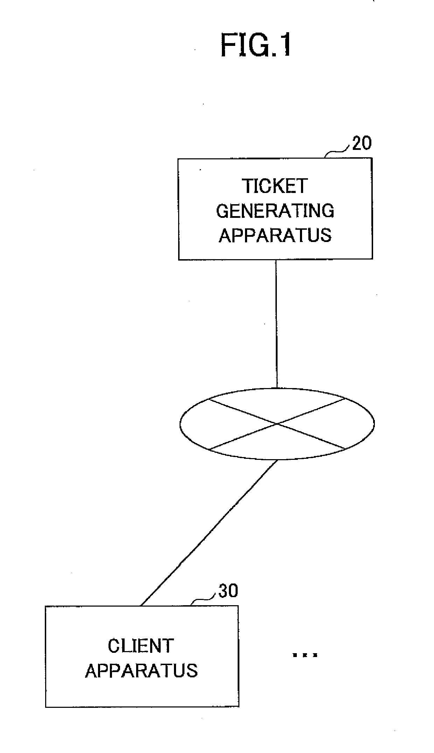

FIG. 1 illustrates an exemplary configuration of an information processing system according to an embodiment of the present invention. In FIG. 1, a ticket generating apparatus 20 and a client apparatus 30 are interconnected via a network such as the Internet or a LAN (local area network), for example.

The client apparatus 30 is an information processing apparatus that issues a request to the ticket generating apparatus 20 to generate a ticket. The client apparatus 30 may be implemented by a PC (Personal Computer), a tablet, a smartphone, or a mobile phone, for example. In the present embodiment, a ticket refers to predetermined data for verifying that an application program (hereinafter simply referred to as "application") has valid authority to call an API (Application Program Interface) implemented in an image forming apparatus 10 as described below. The client apparatus 30 may be used by a third-party vendor that is developing an application that uses the API, for example. In the present embodiment, it is assumed that among a group of APIs implemented in the image forming apparatus 10, certain APIs (e.g., functions or methods) require a ticket upon being used while other APIs (i.e., APIs other than the certain APIs) can be used without a ticket. For example, a certain API may be a private API that is only allowed to be used by a specific application. In the following descriptions, the certain API that requires a ticket is referred to as "limited API".

The ticket generating apparatus 20 is a computer that generates a ticket in response to a request from the client apparatus 30. The ticket generating apparatus 20 may also be a computer system including a plurality of computers, for example. Note that the ticket generating apparatus 20 may be managed by the vendor of the image forming apparatus 10, for example.

Note, also, that in some embodiments, a plurality of client apparatuses 30 may be connected to the ticket generating apparatus 20 via a network, for example.

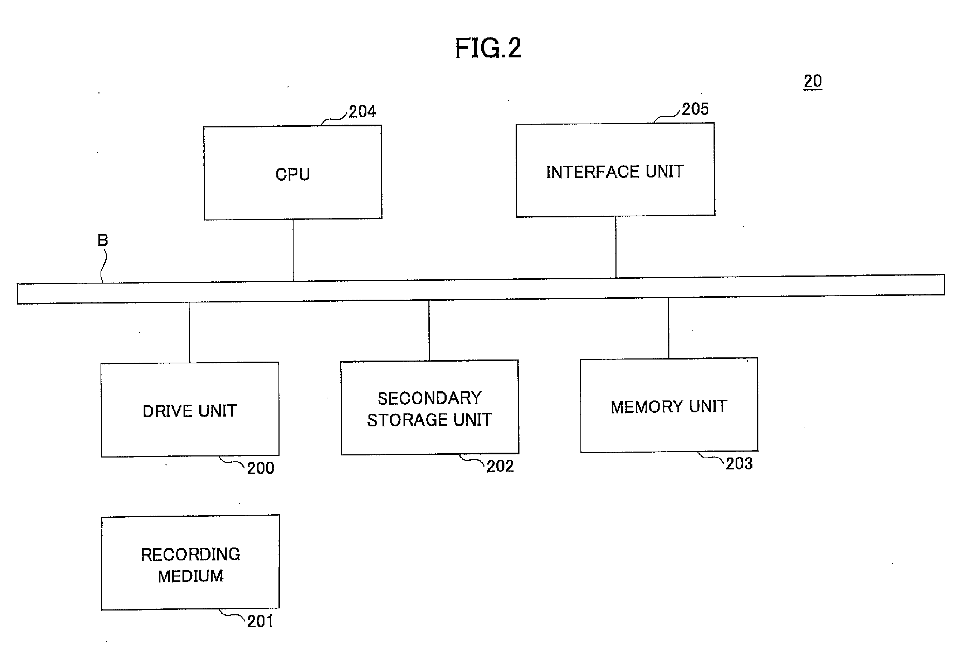

FIG. 2 illustrates an exemplary hardware configuration of the ticket generating apparatus 20 according to the present embodiment. In FIG. 2, the ticket generating apparatus 20 includes a drive unit 200, a secondary storage unit 202, a memory unit 203, a CPU (central processing unit) 204, and an interface unit 205 that are interconnected by a bus B.

A program for executing a process at the ticket generating apparatus 20 may be provided by a recording medium 201 such as a CD-ROM. When the recording medium 201 storing the program is loaded into the drive unit 200, the program may be installed on the secondary storage unit 202 from the recording medium 201 via the drive unit 200. The program, however, does not necessarily have to be installed from the recording medium 201, and may alternatively be downloaded from some other computer via a network, for example. The secondary storage unit 202 stores files and data in addition to installed programs.

The memory unit 203 reads a program from the secondary storage unit 202 and stores the read program in response to an instruction to activate the program. The CPU 204 implements a function of the ticket generating apparatus 20 by executing a relevant program stored in the memory unit 203. The interface unit 205 is used as an interface for establishing connection with a network.

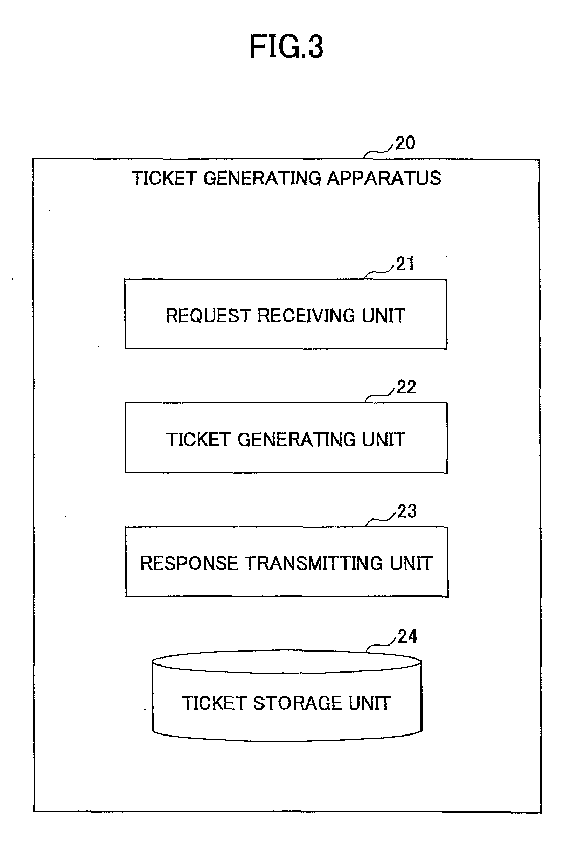

FIG. 3 illustrates an exemplary functional configuration of the ticket generating apparatus 20 according to the present embodiment. In FIG. 3, the ticket generating apparatus 20 includes a request receiving unit 21, a ticket generating unit 22, and a response transmitting unit 23. These functional components may be implemented by the CPU 204 executing one or more programs that are installed in the ticket generating apparatus 20, for example. The ticket generating apparatus 20 also uses a ticket storage unit 24. The ticket storage unit 24 may be implemented by the secondary storage unit 202 or a storage device that is connected to the ticket generating apparatus 20 via a network, for example.

The request receiving unit 21 receives the ticket generation request that is transmitted from the client apparatus 30. The ticket generating unit 22 uses the information contained in the ticket generation request to generate a ticket. The response transmitting unit 23 transmits a response containing the ticket generated by the ticket generating unit 22 to the client apparatus 30 corresponding to the sender of the ticket generation request. The ticket storage unit 24 stores the ticket generated by the ticket generating unit 22.

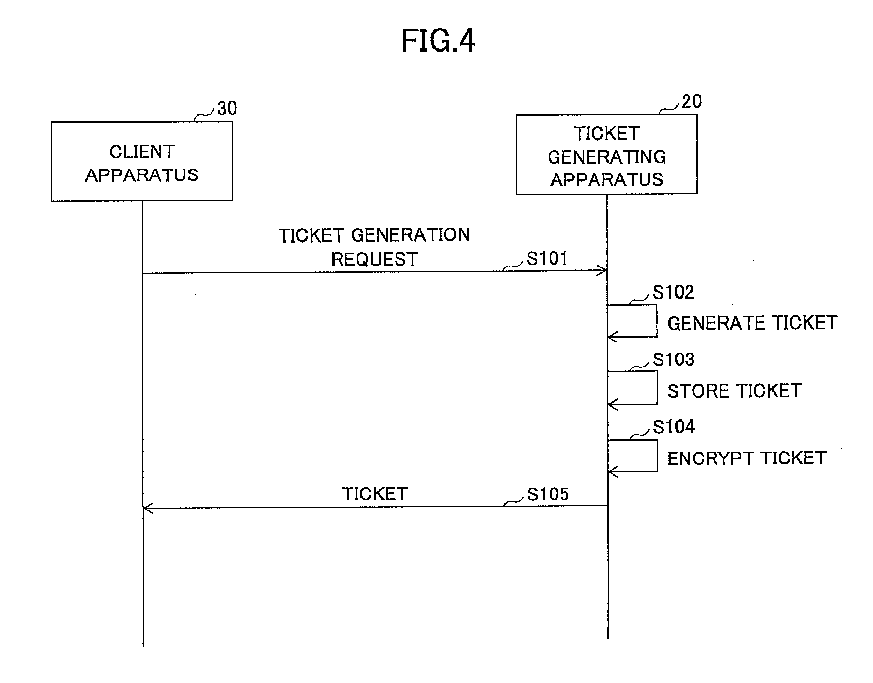

In the following, process steps executed by the ticket generating apparatus 20 and the client apparatus 30 are described. FIG. 4 is a sequence chart illustrating exemplary process steps executed by the ticket generating apparatus 20 and the client apparatus 30.

In step S101, the client apparatus 30 transmits a ticket generation request to the ticket generating apparatus 20 according to an instruction from a user. The ticket generation request includes identification information identifying the specific product or the specific type of an application that is configured to use a limited API (hereinafter referred to as "product ID") and identification information of one or more limited APIs (e.g., functions or methods) that are to be used by the application. Identification information of an API may include information for distinguishing the API from another API (hereinafter referred to as "API number") and version information of the API, for example. Note that in a case where version control over the API is not conducted, the version information does not have to be included in the identification information of the API. Also, note that the ticket generation request corresponds to a request to the vendor of the image forming apparatus 10 seeking permission to use a limited API. In some embodiments, the ticket generation request may be transmitted by mail in the form of a document including the content of the request, or the ticket generation request may be transmitted as an email including the content of the request, for example.

When the ticket generation request is received by the request receiving unit 21, the ticket generating unit 22 generates a ticket in response to the ticket generation request (step S102). The ticket generated in response to the ticket generation request is a ticket for authorizing the application with the product ID included in the ticket generation request to use the limited API with the API number and the version information included in the ticket generation request.

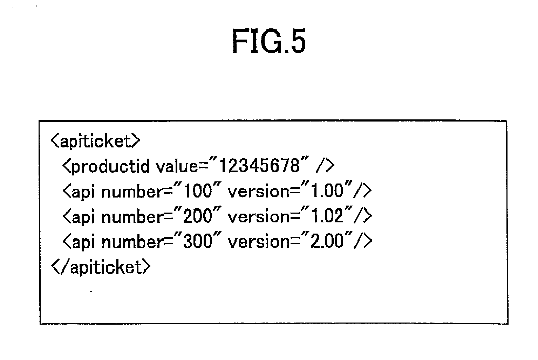

FIG. 5 illustrates an exemplary configuration of information included in a ticket. In FIG. 5, the ticket is defined in the XML (eXtensible Markup Language) format. Note, however, that the ticket may also be defined in a format other than the XML format.

The ticket includes an apiticket element as the root element enclosed within apiticket tags. The apiticket element includes a productid element and one or more of api elements.

The productid element is an element that contains a product ID. In the example of FIG. 5, the productid element includes a product ID represented as a value of a value attribute.

The api element is an element including an API number and version information. In the example of FIG. 5, each api element includes a number attribute and a version attribute. The value of the number attribute represents the API number. The value of the version attribute represents version information.

Note that FIG. 5 illustrates an example where one ticket is associated with one application. However, in other examples, one ticket may be associated with a plurality of applications. In this case, if the limited API to be used by each application varies, the ticket may include separate api elements for each application. For example, the ticket may include an api element associated with each limited API as a child element of the product id element including the product ID of the application that is to use the corresponding limited API.

Then, the ticket generating unit 22 stores the generated ticket in the ticket storage unit 24 (step S103). By storing the generated ticket in the ticket storage unit 24, the vendor of the image forming apparatus 10 may be able to manage information associating each application with each limited API that the application is authorized to use, for example. Also, based on the information stored in the ticket storage unit 24, the ticket generating unit 22 may calculate a price for using a limited API, for example. Note that the method of calculating the price is not limited to a particular method. A fee may be charged based on the price calculation result, for example.

Then, the ticket generating unit 22 encrypts the generated ticket (step S104). For example, the product ID of the generated ticket may be used as an encryption key. Specifically, the ticket in the XML format may be handled as binary data and an exclusive OR operation may be applied to encrypt the binary data in units of 4 bytes using the product ID, for example. Note, however, that the encryption may be performed by other methods as well. In a case where the product ID is used as an encryption key, the product ID may be associated with the corresponding ticket by encrypting the ticket. Therefore, in this case, the product ID does not have to be included in the ticket. For example, in FIG. 5, the productid element does not have to be included in the ticket.

Note that by encrypting the ticket, the risk of ticket tampering after the ticket has been provided to the third-party vendor corresponding to the application developer may be reduced such that the likelihood of an API number or version information of a limited API not specified in the ticket generation request being inserted into the ticket may be reduced, for example. Also, by encrypting the ticket using the product ID, the risk of a ticket issued with respect to a certain application being used by another application may be reduced, for example. Note, however, that the method of encrypting the ticket needs to be kept confidential from the third-party vendor corresponding to the application developer, for example.

Then, the response transmitting unit 23 transmits a response containing the encrypted ticket to the client apparatus 30 (step S105). The client apparatus 30 receives the ticket. The user of the client apparatus 30 (e.g., application developer/vendor) may include the ticket in an archive file for installing the application associated with the ticket and sell the application in such a state, for example. The archive file may be a JAR (Java (registered trademark) Archive) file or a file in some other format, for example. The ticket may be stored in a file and included in the archive file, for example.

Note that before executing step S102 of FIG. 4, a determination may be made by an administrator at the vendor of the image forming apparatus 10, for example, on whether to permit the generation of the ticket. For example, the ticket generating apparatus 20 may prompt a display unit to display the content of the ticket generation request. In turn, the administrator may check the content of the ticket generation request and input an instruction indicating whether to permit the generation of the ticket to the ticket generating apparatus 20. If an instruction indicating permission to generate the ticket is input, the ticket generating apparatus 20 may execute step S102 and the subsequent process steps. On the other hand, if an instruction indicating that the generation of the ticket is not permitted is input, the ticket generating apparatus 20 does not execute step S102 and the subsequent process steps.

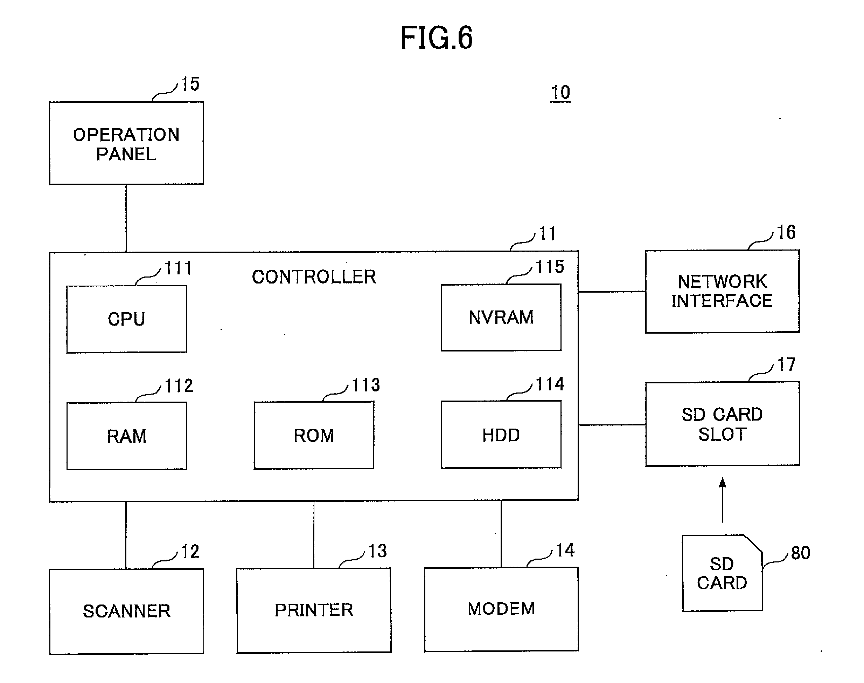

In the following, the image forming apparatus 10 corresponding to an installation destination of the application is described. FIG. 6 illustrates an exemplary hardware configuration of the image forming apparatus 10 according to the present embodiment. In FIG. 6, the image forming apparatus 10 includes a controller 11, a scanner 12, a printer 13, a modem 14, an operation panel 15, a network interface 16, and an SD card slot 17 as hardware components.

The controller 11 includes a CPU (Central Processing Unit) 111, a RAM (Random Access Memory) 112, a ROM (Read-Only Memory) 113, a HDD (Hard Disk Drive) 114, and a NVRAM (Non-Volatile RAM) 115. The ROM 113 stores various programs and data to be used by the various programs, for example. The RAM 112 is used as a storage area for loading a program and as a working area of the loaded program. The CPU 111 executes the program loaded in the RAM 112 to implement various functions. The HDD 114 stores the programs and various data to be used by the programs, for example. The NVRAM 115 stores various setting information.

The scanner 12 is hardware (image scanning unit) for scanning image data from a document. The printer 13 is hardware (printing unit) for printing out print data on a print sheet. The modem 14 is hardware for establishing connection with a telephone line and is used to transmit/receive image data via facsimile communication. The operation panel 15 is hardware including an input unit such as a button for accepting an input from a user and a display unit such as a liquid crystal display panel. The liquid crystal display panel may include a touch panel function, for example. In this case, the liquid crystal display panel may function as both an input unit and a display unit, for example. The network interface 16 is hardware for establishing connection with a network such as a LAN (which may be wireless or wired). The SD card slot 17 is used to read a program stored in an SD card 80. That is, in the image forming apparatus 10, a program stored in the ROM 113 as well as a program stored in the SD card 80 may be loaded in the RAM 112 and executed. Note that a recording medium other than the SD card 80 such as a CD-ROM or a USB memory may be used instead of the SC card 80. That is, the type of recording medium that may be used to implement the function of the SD card 80 in the image forming apparatus 10 is not particularly limited. In this case, the SD card slot 17 may be replaced by suitable hardware according to the type of recording medium used.

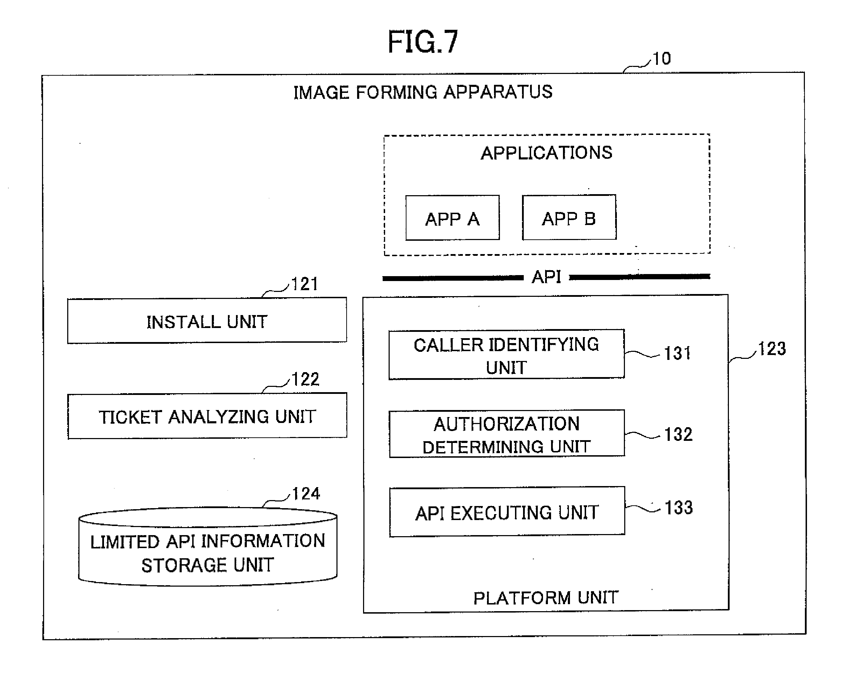

FIG. 7 illustrates an exemplary functional configuration of the image forming apparatus 10 according to the present embodiment. In FIG. 7, the image forming apparatus 10 includes an install unit 121, a ticket analyzing unit 122, and a platform unit 123. These functional components may be implemented by the CPU 111 executing one or more programs installed in the image forming apparatus 10, for example. The image forming apparatus 10 also utilizes a limited API information storage unit 124. The limited API information storage unit 124 may be implemented by the HDD 114, the NVRAM 115, or a storage device that is connected to the image forming apparatus 10 via a network, for example.

The install unit 121 controls a process of installing an application in the image forming apparatus 10. In a case where a ticket is included in an archive file including the application to be installed, the ticket analyzing unit 122 analyzes the content of the ticket and stores information based on the analysis result in the limited API information storage unit 124. The limited API information storage unit 124 stores information relating to each limited API such as the product ID of the application that is authorized to use of the limited API, for example.

The platform unit 123 provides a group of APIs to be used by one or more applications and functions as an application execution environment. In FIG. 7, app A and app B are illustrated as examples of applications running on the platform 123.

In FIG. 7, the platform unit 123 includes a caller identifying unit 131, an authorization determining unit 132, and an API executing unit 133. Some of the APIs provided by the platform unit 123 correspond to limited APIs. However, in some cases, all of the APIs provided by the platform unit 123 may correspond to limited APIs.

The caller identifying unit 131 identifies an application corresponding to a caller of a limited API. The authorization determining unit 132 determines whether the application identified by the caller identifying unit 131 is authorized to use the limited API being called by referring to the limited API information storage unit 124.

The API executing unit 133 controls execution of a process in response to a request from an application via an API of the platform unit 123.

Note that in some embodiments, the API executing unit 133 may be provided for each API. Further, in some embodiments, the caller identifying unit 131 and the authorization determining unit 132 may be provided for each limited API.

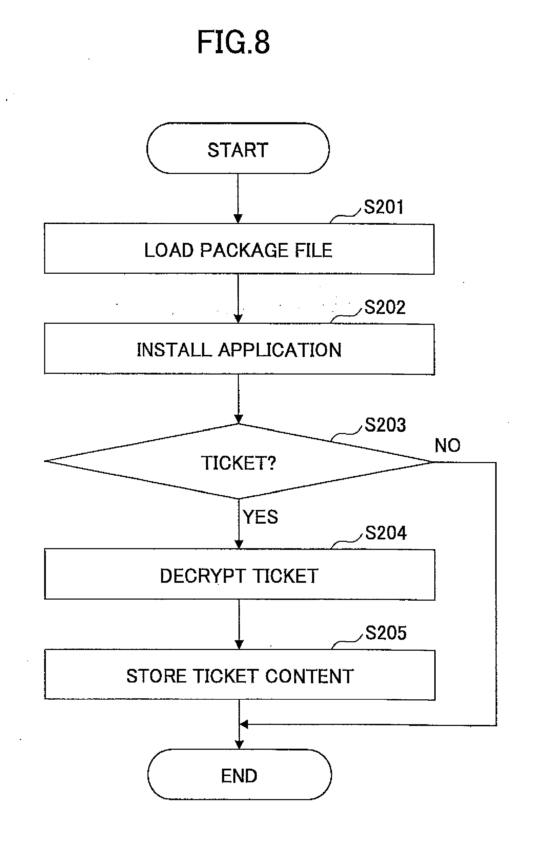

In the following, process steps executed by the image forming apparatus 10 are described. FIG. 8 is a flowchart illustrating exemplary process steps executed by the image forming apparatus 10 upon installing an application.

When an instruction to install a certain application is issued with respect to the image forming apparatus 10, the install unit 121 loads the archive file of the application to retrieve an application file and a data file that are included in the archive file (step S201). The application file refers to a file that contains an application. The data file refers to a file that stores data such as configuration data associated with an application. Note that the archive file of the application may be received via a network, or the archive file may be read from a recording medium such as the SD card 80, for example.

Then, the install unit 121 installs the application in the image forming apparatus 10 (step S202). For example, the install unit 121 may store the application file and data file in a predetermined folder of the HDD 114.

Then, the install unit 121 determines whether the data file includes a file that stores a ticket (step S203). If a file storing a ticket is not included (NO in step S203), the process of FIG. 8 is ended. If such a file is included (YES in step S203), the ticket analyzing unit 122 decrypts the ticket stored in the file using the product ID of the application to be installed (step S204). For example, if the ticket is encrypted by applying an exclusive OR operation on four bytes of data using the product ID as an encryption key, the ticket may be decrypted by reapplying the exclusive OR operation on four bytes of encrypted data using the product ID. Note that the product ID used for decryption may be included in one of the data files, or the product ID may be input by a user along with the install instruction, for example.

Then, the ticket analyzing unit 122 stores the product ID used to decrypt the ticket or the product ID included in the ticket in the limited API information storage unit 124 in association with the API number and version information included in the decrypted ticket (step S205).

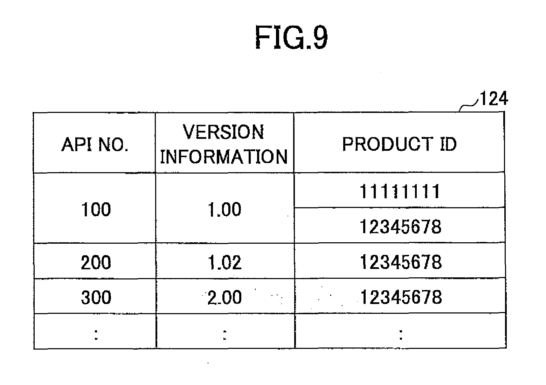

FIG. 9 illustrates an exemplary configuration of the limited API information storage unit 124. As illustrated in FIG. 9, the limited API information storage unit 124 stores the API number and version information of each limited API in association with the product ID of an application that is authorized to use the limited API.

Note that the API number and version information of the limited APIs may be registered in advance, or they may be registered in step S205, for example. If they are registered in advance, the limited API information storage unit 124 may include record entries having empty items for the product ID.

Also, as illustrated in FIG. 9, product IDs of multiple applications may be associated with one limited API. That is, multiple applications may be authorized to use the same limited API.

In the following, process steps that are executed by the image forming apparatus 10 when a limited API is called by one of the applications installed in the image forming apparatus 10 are described.

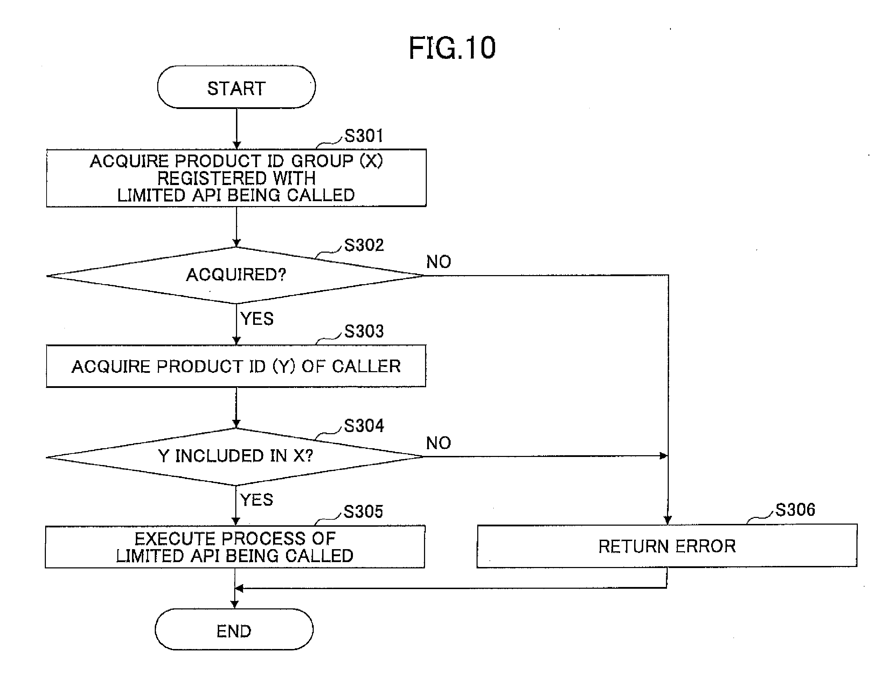

FIG. 10 is a flowchart illustrating exemplary process steps of the image forming apparatus that are executed upon calling a limited API.

When a limited API is called, the authorization determining unit 132 acquires one or more product IDs (product ID group X) that are stored in the limited API information storage unit 124 in association with the API number and version information of the limited API being called (hereinafter referred to as "target API") (step S301). Note that the process of FIG. 10 is executed in response to a call for the target API. Therefore, the API number and version information of the target API may be determined based on the call for the target API.

If no corresponding product ID is acquired (NO in step S302), the API executing unit 133 returns an error to the application corresponding to the caller of the target API (step S306). Note that a product ID may not be acquired in a case where the API number and version information of the target API is not stored in the limited API information storage unit 124 or a case where no product ID is stored in association with the API number and version information of the target API, for example.

If a corresponding product ID is acquired (YES in step S302), the caller identifying unit 131 acquires the product ID of the application corresponding to the caller of the target API (product ID Y) (step S303). The product ID of the application corresponding to the caller may be specified in an argument of the limited API, for example. In this case, the caller identifying unit 131 may acquire the product ID from the argument of the target API. Alternatively, the caller identifying unit 131 may acquire the product ID of the application corresponding to the caller by call stack tracing, for example. In this case, application spoofing may be more difficult as compared with the case where the product ID is specified by an argument. Note that in the case of adopting the method of acquiring the product ID through call stack tracing, the product ID needs to be included (described) in the application.

Then, the authorization determining unit 132 determines whether the product ID of the application corresponding to the caller of the target API is included in the one or more product IDs acquired in step S301 (step S304). If the product ID of the application corresponding to the caller is not included in the one or more product IDs acquired in step S301 (NO in step S304), the API executing unit 133 returns an error to the application corresponding to the caller of the target API (step S306). If the product ID of the application corresponding to the caller is included in the one or more product IDs acquired in step S301 (YES in step S304), the authorization determining unit 132 authorizes execution of the process associated with the target API. In turn, the API executing unit 133 controls execution of the process associated with the target API (step S305).

Note that in the above-described example, the information contained in the ticket is stored in the limited API information storage unit 124 when the application is installed. However, in some embodiments, the ticket may be specified by an argument of the limited API, for example.

Also, in some embodiments, the APIs provided by the platform unit 123 may be APIs that can be called via a network such as HTTP (HyperText Transfer Protocol) based WebAPIs, for example. In this case, the application corresponding to the caller of the limited API does not necessarily have to be installed in the image forming apparatus 10. If the application corresponding to the caller is not installed in the image forming apparatus 10, this means that information included in the ticket associated with the application corresponding to the caller of the limited API cannot be stored in the limited API information storage unit 124 upon installing the application.

Accordingly, in such case, the ticket may be stored in an information processing apparatus that stores the application calling the limited API, for example. The information processing apparatus may be connected to the image forming apparatus 10 via a network such as a LAN (Local Area Network) or the Internet, for example. Alternatively, the information processing apparatus may be connected to the image forming apparatus 10 via a USB (Universal Serial Bus) cable, for example. In this case, the information processing apparatus may be a smart terminal that implements the functions of the operation panel 15 and is used in place of the operation panel 15, for example. The smart terminal may be fixed to the image forming apparatus 10, for example.

Before calling the limited API via a network, for example, the application stored in such an information processing apparatus may transmit the product ID of the application and a ticket issued for the application to the image forming apparatus 10. The image forming apparatus 10 may then execute the processes of steps S204 and S205 of FIG. 8 with respect to the received ticket and product ID. Then, the application may transmit a call request for calling the limited API that includes the product ID of the application to the image forming apparatus 10. Alternatively, identification information of a cookie or the like that is generated in association with the product ID may be issued to the application from the image forming apparatus 10, for example. Further, an expiration date may be set up in the identification information, for example. The application may then transmit a call request for calling the limited API that includes the identification information to the image forming apparatus 10, for example.

Note that processes executed by the image forming apparatus 10 when the limited API is called via a network may be basically similar to the process steps of FIG. 10. However, in step S303, the product ID included in the call request for the limited API or the product ID associated with the identification information included in the call request for the limited API may be acquired as the product ID of the caller.

As described above, according to an aspect of the present embodiment, an application that is allowed to call a limited API may be restricted to a certain application. In this way, operations may be implemented such that only a certain third-party vendor is allowed to use a limited API, for example.

Also, information associating each limited API with the application that is authorized to use the limited API may be managed at the image forming apparatus 10 that provides the limited API. Therefore, a server computer or the like for managing such information does not have to be separately provided, for example.

Note that in the above-described example, the image forming apparatus 10 is illustrated as an example of an information processing apparatus including a group of interfaces for receiving a request from a program. However the present embodiment may also be applied to information processing apparatuses other than the image forming apparatus 10. For example, the present embodiment may be applied to a projector, an electronic blackboard, a videoconferencing system, a digital camera, and a general-purpose computer such as a PC (Personal Computer).

Also, in the above-described example, a price for using a limited API is calculated by the ticket generating apparatus 20. However, the price may also be calculated by the image forming apparatus 10 (e.g., ticket analyzing unit 122) based on information stored in the limited API information storage unit 124, for example.

Note that the caller identifying unit 131 of the above-described embodiment is an example of an identifying unit of the present invention. The authorization determining unit 132 is an example of an authorization unit. The ticket is an example of predetermined data. The ticket analyzing unit 122 is an example of a storage processing unit and a calculating unit.

Although the present invention has been described above with reference to certain illustrative embodiments, the present invention is not limited to these embodiments, and numerous variations and modifications may be made without departing from the scope of the present invention.

The present invention can be implemented in any convenient form, for example, using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can comprise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can comprise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, a hard disk, a CD ROM, a magnetic tape device or a solid state memory device.

The hardware platform includes any desired hardware resources including, for example, a central processing unit (CPU), a random access memory (RAM), and a hard disk drive (HDD). The CPU may include processors of any desired type and number. The RAM may include any desired volatile or nonvolatile memory. The HDD may include any desired nonvolatile memory capable of recording a large amount of data. The hardware resources may further include an input device, an output device, and a network device in accordance with the type of the apparatus. The HDD may be provided external to the apparatus as long as the HDD is accessible from the apparatus. In this case, the CPU, for example, the cache memory of the CPU, and the RAM may operate as a physical memory or a primary memory of the apparatus, while the HDD may operate as a secondary memory of the apparatus.

## Claims

1. An information processing apparatus (10) including a group of interfaces for accepting a request from one or more programs, the information processing apparatus being **characterized by** comprising:
an identifying unit (131) configured to identify a program of the one or more programs that corresponds to a caller of an interface of the group of interfaces when the interface is called; and
an authorization unit (132) configured to authorize execution of a process associated with the interface in a case where information authorizing the program identified by the identifying unit to use the interface being called is stored in a storage unit (124).

2. The information processing apparatus as claimed in claim 1, wherein
the identifying unit acquires identification information of the caller; and
the authorization unit authorizes execution of the process associated with the interface in a case where identification information of the interface being called is stored in the storage unit in association with the identification information of the caller.

3. The information processing apparatus as claimed in claim 2, further comprising:
a storage processing unit (122) configured to store in the storage unit, identification information of a program to be installed in the information processing apparatus in association with identification information of a relevant interface of the group of interfaces in a case where predetermined data including the identification information of the relevant interface is associated with the program to be installed.

4. The information processing apparatus as claimed in claim 3, wherein the predetermined data is encrypted by the identification information of the program with which the predetermined data is associated.

5. The information processing apparatus as claimed in claim 1, wherein the group of interfaces can be called via a network.

6. The information processing apparatus as claimed in any one of claims 1-5, further comprising:
a calculating unit (122) configured to calculate a price for using the interface based on information stored in the storage unit.

7. An information processing method that is implemented by an information processing apparatus including a group of interfaces for accepting a request from one or more programs, the information processing method comprising:
an identifying step (S303) of identifying a program of the one or more programs that corresponds to a caller of an interface of the group of interfaces when the interface is called; and
an authorization step (S304) of authorizing execution of a process associated with the interface in a case where information authorizing the program identified in the identifying step to use the interface being called is stored in a storage unit (124).

8. The information processing method as claimed in claim 7, wherein
the identifying step includes acquiring identification information of the caller; and
the authorization step includes authorizing execution of the process associated with the interface in a case where identification information of the interface being called is stored in the storage unit in association with the identification information of the caller.

9. The information processing method as claimed in claim 8, further comprising:
a storage step of storing in the storage unit, identification information of a program to be installed in the information processing apparatus in association with identification information of a relevant interface of the group of interfaces in a case where predetermined data including the identification information of the relevant interface is associated with the program to be installed.

10. The information processing method as claimed in claim 9, wherein the predetermined data is encrypted by the identification information of the program with which the predetermined data is associated.

11. The information processing method as claimed in claim 7, wherein the group of interfaces can be called via a network.

12. The information processing method as claimed in any one of claims 7-11, further comprising:
a calculating step of calculating a price for using the interface based on information stored in the storage unit.

13. A computer program product comprising a computer-readable medium having a computer program recorded thereon that is configured to cause an information processing apparatus including a group of interfaces for receiving a request from one or more programs to execute an information processing method comprising:
an identifying step (S303) of identifying a program of the one or more programs that corresponds to a caller of an interface of the group of interfaces when the interface is called; and
an authorization step (S304) of authorizing execution of a process associated with the interface in a case where information authorizing the program identified in the identifying step to use the interface being called is stored in a storage unit (124).

14. The computer program product as claimed in claim 13, wherein
the identifying step includes acquiring identification information of the caller; and
the authorization step includes authorizing execution of the process associated with the interface in a case where identification information of the interface being called is stored in the storage unit in association with the identification information of the caller.

15. The computer program product as claimed in claim 14, wherein the information processing method further includes:
a storage step of storing in the storage unit, identification information of a program to be installed in the information processing apparatus in association with identification information of a relevant interface of the group of interfaces in a case where predetermined data including the identification information of the relevant interface is associated with the program to be installed.

16. The computer program product as claimed in claim 15, wherein the predetermined data is encrypted by the identification information of the program with which the predetermined data is associated.

17. The computer program product as claimed in claim 13, wherein the group of interfaces can be called via a network.

18. The computer program product as claimed in any one of claims 13-17, wherein the information processing method further includes:
a calculating step of calculating a price for using the interface based on information stored in the storage unit.
